# EUROPEAN PATENT SPECIFICATION

(11) **EP 3 083 115 B1**
(45) Date of publication and mention of the grant of the patent: **05.02.2020**
(21) Application number: 14870825.8
(22) Date of filing: 03.12.2014
(51) Int. Cl.: B22F 3/105, B22F 5/00, F01D 25/28, B33Y 80/00, B33Y 10/00

(54) **ADDITIVE MANUFACTURING LIFT AND PULL TOOL**
HEBE- UND ZUGWERKZEUG ZUR ADDITIVEN FERTIGUNG
FABRICATION ADDITIVE D'UN OUTIL DE LEVAGE ET DE TRACTION

(30) Priority: 17.12.2013 US 201361917016 P
(43) Date of publication of application: 26.10.2016
(73) Proprietor: United Technologies Corporation, Farmington, CT 06032 (US)
(72) Inventor: PETTY, Dale William, Wallingford, Connecticut 06492 (US)
(74) Representative: Dehns
(86) International application number: PCT/US2014/068355
(87) International publication number: WO 2015/094669

(56) References cited:
- EP-A1- 1 911 568
- EP-A1- 2 570 595
- EP-A1- 2 620 241
- EP-A1- 2 620 241
- JP-A- 2000 176 721
- JP-A- 2002 371 805
- KR-A- 20050 054 480
- US-A- 1 279 799
- US-A- 5 220 784

## Description

### BACKGROUND

This disclosure relates to a tool for a gas turbine engine, and, more particularly, to a tool made by an additive manufacturing process for disassembling a gas turbine engine.

Gas turbine engines include both rotating and stationary components. The rotating components, such as rotors and shafts, are supported by bearings that are connected to the stationary parts of the engine. In some cases, a rotor can have a tight or "press" fit over a shaft. When the engine is axially disassembled, a substantial amount of force may be required to separate the rotor from the shaft. This force can be provided through a specialized tool that is configured to connect to the rotor. In addition, other components of the engine, such as a bearing, may limit the accessibility of the rotor. Creating such a tool that can fit into a limited space that can also transmit substantial force can be difficult using traditional manufacturing techniques. US 1279799 A describes a water driven motor.

### SUMMARY

According to one embodiment of the present invention, a method of making a tool includes creating a computer file defining the tool in layers and building the tool using an additive manufacturing process that builds the tool on a layer-by-layer basis. The tool includes at least one of the following features: a substantially square dogleg inner end corner, a substantially completely cylindrical dogleg surface, an angled dogleg inlet, and an integral mounting point at or near one end of the body.

According to another embodiment, a tool includes a cylindrical body with dogleg slots at one end, and at least one of the following features: a substantially square dogleg inner end corner, a substantially completely cylindrical dogleg surface, an angled dogleg inlet, and an integral mounting point at or near one end of the body. The tool is made by the steps of selectively sintering a first layer of pulverant material within a frame to make a partially built tool, lowering the partially built tool, adding a second layer of pulverant material on top of the partially built tool, and selectively sintering the second layer of pulverant material to the partially built tool.

According to another embodiment, a tool includes a cylindrical body with dogleg slots at one end at least one of the following features: a substantially square dogleg inner end corner, a substantially completely cylindrical dogleg surface, an angled dogleg inlet, and an integral mounting point at or near one end of the body.

### BRIEF DESCRIPTION OF THE DRAWINGS

FIG. 1 is a perspective view of a prior art tool including a plurality of dogleg slots and an eyelet.
FIG. 2 is a cross section view of a portion of a partially disassembled gas turbine engine with the prior art tool, a rotor, a shaft, and a bearing.
FIG. 3 is a side view of a machining operation on the prior art tool.
FIG. 4 is a cross section view of the machining operation on the prior art tool along line 4-4 in FIG. 3.
FIG. 5 is a cross section view of the prior art tool along line 5-5 in FIG. 1.
FIG. 6 is a front view of a slot in the prior art tool in portion 6 in FIG. 1.
FIG. 7 is a perspective view of a tool including a plurality of dogleg slots and an integral mounting point.
FIG. 8 is a cross section view of the tool along line 8-8 in FIG. 7
FIG. 9 is a front view of an alternate embodiment dogleg slot.
FIG. 10 is a perspective view of an additive manufacturing apparatus.
FIG. 11 is a cross section view of the additive manufacturing apparatus along line 11-11 in FIG. 10.

### DETAILED DESCRIPTION

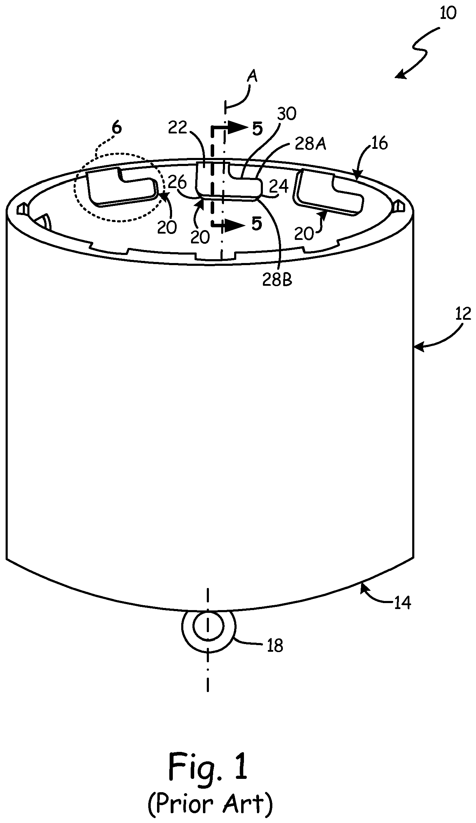

FIG. 1 is a perspective view of prior art tool 10. Tool 10 has a hollow cylindrical body 12 that extends along axis A from end cap 14 to open end 16. End cap 14 includes a threaded hole (not shown) into which eyelet 18 is fastened, and open end 16 includes a plurality of blind dogleg slots 20. In the illustrated embodiment, dogleg slots 20 are spaced evenly around the inside of body 12. Each dogleg slot 20 is an "L" shaped relief in body 12 that includes inlet 22 and inner end 24. Inlet 22 extends axially from open end 16, and inner end 24 extends circumferentially over from inlet 22. Inlet 22 includes inlet end corner 26, and inner end 24 includes inner end corners 28A-28B and bearing surface 30.

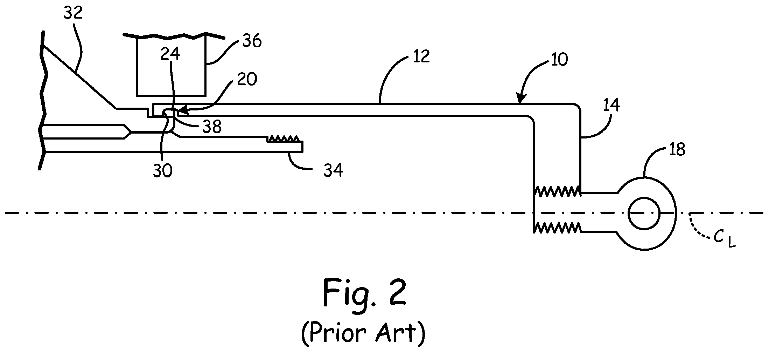

FIG. 2 is a cross section view of a portion of a partially disassembled gas turbine engine, with prior art tool 10, rotor disk 32, shaft 34, and bearing 36. Rotor disk 32, shaft 34, and bearing 36 have round shapes that extend circumferentially around engine centerline C_{L}. Rotor disk 32 is press fit over shaft 34, and moving rotor disk 32 axially relative to shaft 34 requires a substantial amount of force. Bearing 36 surrounds rotor disk 32 and shaft 34, restricting access to rotor disk 32. In the illustrated embodiment, rotor disk 32 includes a plurality of tabs 38 (although only one is visible in FIG. 2). Tabs 38 are intermittent projections that extend radially outward from rotor disk 32 and are circumferentially spaced apart. Tool 10 is configured to mate with rotor disk 32 such that each tab 38 can be axially inserted into an inlet 22 (shown in FIG. 1) of a dogleg slot 20. Once tool 10 is placed on tabs 38, tool 10 is rotated relative to rotor disk 32 so that each tab 10 is positioned in an inner end 24 of a dogleg slot 20.

When axial force is applied to eyelet 18, tabs 38 of rotor disk 32 are engaged by bearing surfaces 30 of tool 10. This allows for rotor disk 32 to be axially moved relative to shaft 34, which is required during the disassembly process of some gas turbine engines.

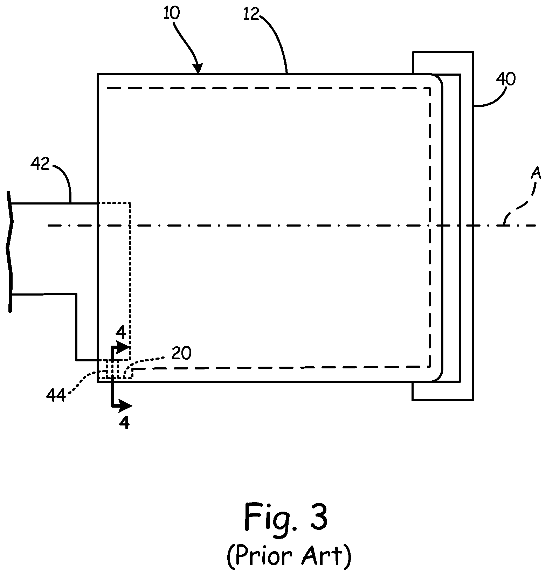

FIG. 3 is a side view of a machining operation on prior art tool 10. Specifically, the machining operation in FIG. 3 is a subtractive manufacturing process for forming dogleg slot 20 in body 12. In the illustrated embodiment, tool 10 is held by chuck 40 and angle head 42 cuts body 12 using a rotating end mill bit 44. In order to form the shape of dogleg slot 20, angle head 42 can be moved axially inward and outward from tool 10 while bit 44 is cutting.

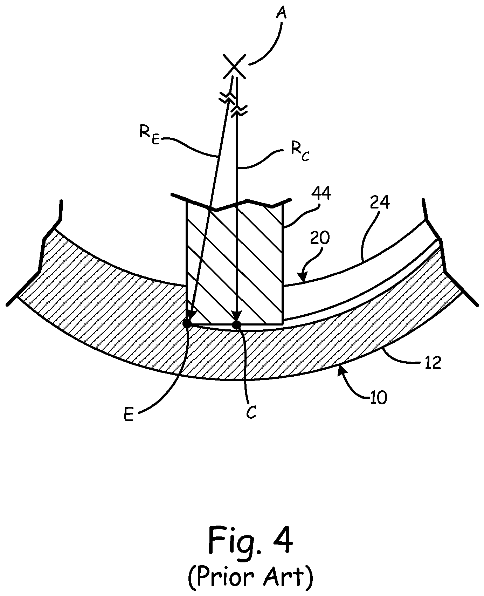

In addition, tool 10 can be rotated by chuck 40 while bit 44 is cutting, as shown in FIG. 4. FIG. 4 is a cross section view of the machining operation on prior art tool 10 along line 4-4 in FIG. 3. In the illustrated embodiment, bit 44 is cutting circumferentially around body 12, for example, to form inner end 24 of dogleg slot 20.

As stated previously, dogleg slot 20 is a blind slot because it does not extend completely through body 12. But dogleg slot 20 has sufficient depth to accommodate tabs 38 (shown in FIG. 2). When cutting, bit 44 sweeps through a cylindrical volume and removes any material within this volume. As shown in FIG. 4, bit 44 has a diameter at bit center C that is parallel to axis A at a distance of center radius R_{C} from axis A. Bit 44 also has a leading point at bit edge E at a distance of edge radius R_{E} from axis A. When bit 44 cuts through body 12 as body 12 is being rotated about axis A, the minimum depth of dogleg slot 20 is center radius R_{C} and the maximum depth of dogleg slot 20 is edge radius R_{E} because body 12 has a concave shape with respect to bit 44.

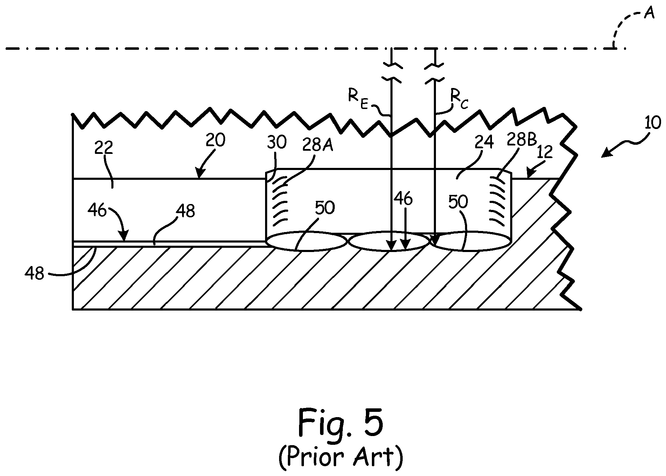

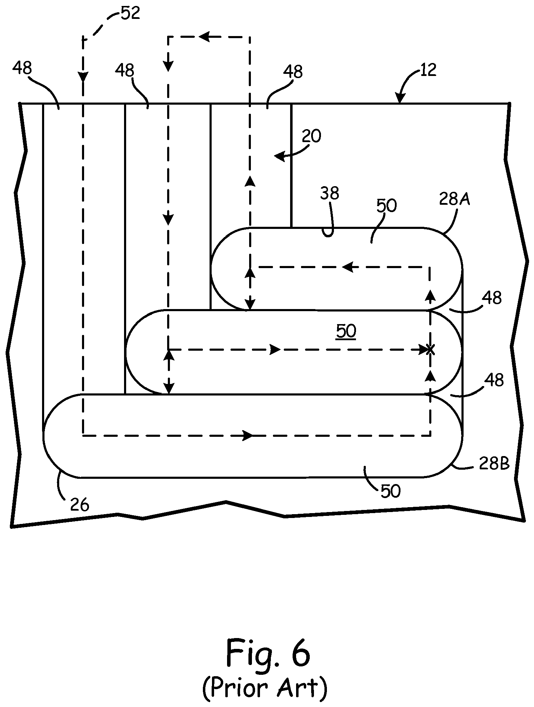

This cutting geometry leads to the effects shown in FIG. 5. FIG. 5 is a cross section view of prior art tool 10 along line 5-5 in FIG. 1. In the illustrated embodiment, dogleg slot 20 has dogleg surface 46 that is faceted and/or troughed. The exact pattern of the facets and/or troughs is dependent on the path of bit 44 (shown in FIG. 4), although FIG. 5 represents a pattern where inlet 22 is predominantly cut axially and inner end 24 is predominantly cut circumferentially (also shown later in FIG. 6). This means that dogleg surface 46 has flat facets 48 from bit 44 (shown in FIG. 3) making an axial pass through inlet 22, rotating body 12, and making another axial pass through inlet 22. The innermost side of inner end 24 also has facets 48 (shown later in FIG. 6) from bit 44 making an axial pass through inner end 24. In addition, dogleg surface 46 has troughs 50 in inner end 24 from bit edge E (shown in FIG. 4) cutting at a depth of edge radius R_{E} and bit center C (shown in FIG. 4) cutting at a depth of center radius R_{C} as body 12 is rotated. Another trough 50 is made after bit 44 (shown in FIG. 3) is axially repositioned and passed through inner end 24 again.

FIG. 6 shows the pattern of facets 48 and troughs 50 in a front view of dogleg slot 20 in prior art tool 10 in portion 6 of FIG. 1. The illustrated embodiment in FIG. 6 is created using cutting path 52, which is the same cutting path that was described with respect to FIG. 5. As stated previously, bit 44 (shown in FIG. 4) cuts a cylindrical volume through body 12. Therefore, the radius of curvature of inlet end corner 26 and inner end corners 28A-28B all have the same radius as that of bit 44. This requires inner end 24 to be substantially longer than a tab 38 (shown in FIG. 2). This is because bearing surface 30 stops at the beginning of inner end corner 28A, which is circumferentially spaced apart from the innermost end of inner end 24.

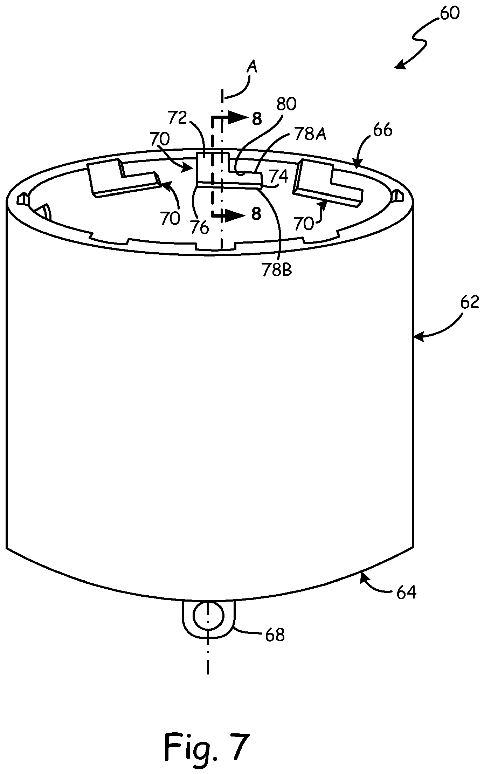

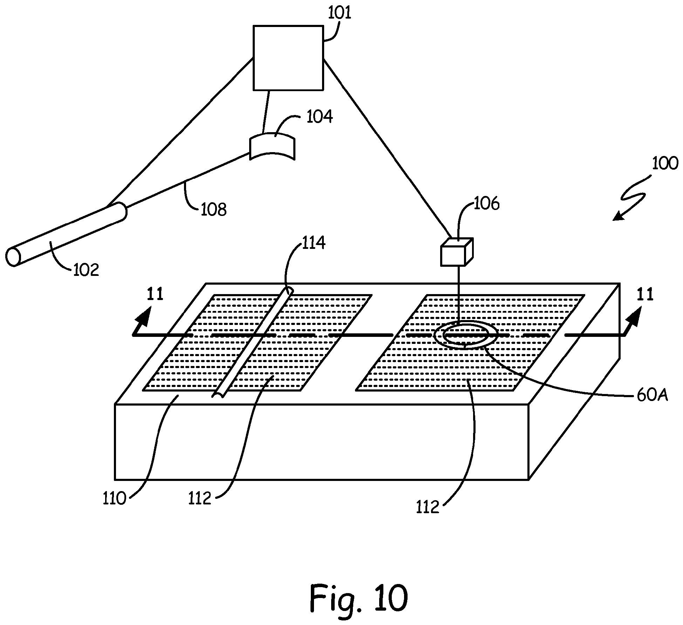

On the other hand, one embodiment of the present invention is depicted in FIG. 7. Shown in FIG. 7 is a perspective view of tool 60 that is manufactured using an additive manufacturing process, such as direct metal laser sintering (DMLS). (This process will be discussed later in greater detail with respect to FIGS. 10-11). Tool 60 has a hollow cylindrical body 62 that extends along axis A and is built in layers from end cap 64 to open end 66. End cap 64 includes an integral mounting point 68, and open end 66 includes a plurality of blind dogleg slots 70. In the illustrated embodiment, dogleg slots 70 are spaced evenly around the inside of body 62. Each dogleg slot 70 is an "L" shaped relief in body 72 that includes inlet 72 and inner end 74. Inlet 72 extends axially from open end 66, and inner end 74 extends circumferentially over from inlet 72. Inlet 72 includes inlet end corner 76 and inner end 74 includes inner end corners 78A-78B and bearing surface 80.

Dogleg slots 70 in tool 60 are sized and shaped to allow tabs 38 (shown in FIG. 2) to be inserted into dogleg slots 70. In the illustrated embodiment, dogleg slots 70 include substantially square inner end corners 78A-78B. This allows each inner end 74 to be no longer than a tab 38 because bearing surface 80 extends to the innermost end of inner end 74.

In the illustrated embodiment, integral mounting point 68 extends from end cap 64 along axis A such that integral mounting point 68 is proximate to the end of body 62. Integral mounting point 68 is a ring with an aperture in the center. But in an alternate embodiment, integral mounting point 68 can be an aperture in end cap 64 that extends axially. In another alternate embodiment, there can be two integral mounting points 68 that are apertures in the side of body 62, on opposite sides of each other. In a further alternate embodiment, two integral mounting points 68 can each include a ring with an aperture in the center and extend from opposite sides of body from each other.

The configuration of tool 60 allows it to interface with rotor disk 32 (shown in FIG. 2) in a similar manner to that of prior art tool 10. Tool 60 can also interface with a pulling device, such as a hydraulic ram or a chain at integral mounting point 68. Therefore, tool 60 can be used to axially move rotor disk 32 relative to shaft 34 (shown in FIG. 2), which is required during the disassembly process of some gas turbine engines. While tool 60 is particularly useful in the disassembly of a gas turbine engine, tool 60 can also be used for other processes on other machines.

Depicted in FIG. 7 is one embodiment of the present invention, to which there are alternative embodiments. For example, tool 60 can have more or fewer dogleg slots 70 than eight, such as twenty-four dogleg slots 70. For another example, dogleg slots 70 can be located on the outer side of body 72.

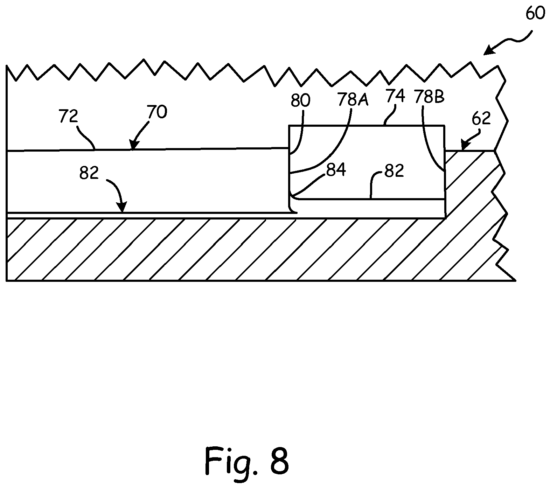

As stated previously, tool 60 is constructed with an additive process. Such a manufacturing method can lead to the geometry shown in FIG. 8. FIG. 8 is a cross section view of tool 60 along line 8-8 in FIG. 7. Dogleg slot 70 is a blind slot because it does not extend completely through body 62. Dogleg slot 70 has sufficient depth to accommodate tabs 38 (shown in FIG. 2), but any additional material adds cost to tool 60 and insufficient material reduces the strength of tool 60. Therefore, dogleg surface 82 is substantially completely cylindrical surface that extends linearly in the axial direction and arcuately in the circumferential direction. Dogleg surface 82 is substantially completely cylindrical in that its overall shape is completely cylindrical, unlike dogleg surface 46 of the prior art (shown in FIGS. 5-6), but dogleg surface 82 can have a surface finish that is not completely smooth.

In the illustrated embodiment, dogleg slot 70 has fillet 84 that is a smooth, arcuate transition between bearing surface 80 and dogleg surface 82. Fillet 84 reduces stress at that transition when tool 60 is under tension during use, which increases the strength of tool 60 and reduces the possibility of cracking and/or failure of body 62.

The method of construction and subsequent configuration of tool 60 allow for tool 60 to have sufficient strength without having unnecessary material. This is because the size of dogleg slots 70 and maximum stress locations in body 12 are minimized. In addition, the features of dogleg slots 70, such as the shapes of inner end corners 78A-78B or fillet 84 can be adjusted independently to create various permutations of tool 60.

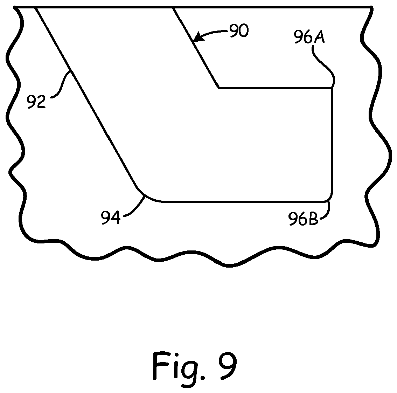

For example, FIG. 9 is a front view of alternate embodiment dogleg slot 90. In particular, dogleg slot 90 includes angled inlet 92, inlet end corner 94, and inner end corners 96A and 96B. Angled inlet 92 extends both axially and circumferentially. In addition, inner end corner 96A is substantially square, inner end corner 96B has a small radius of curvature, and inlet end corner 94 has a large radius of curvature. The alternate embodiment configuration of dogleg slot 90 demonstrates the greater flexibility of the additive manufacturing process.

Shown in FIG. 10 is additive manufacturing apparatus 100. In particular, FIG. 10 shows an additive manufacturing apparatus which uses laser additive manufacturing to create a three-dimensional object out of sinterable, pulverant material. While direct metal laser sintering (DMLS) is described, other additive manufacturing techniques may be employed.

Additive manufacturing apparatus 100 includes computer 101 and a set of optical components, including laser 102, mirror 104, and moving optical head 106, which guide laser beam 108 according to the instructions from computer 101. Laser 102 may be any source of heating radiation, such as a CO2 laser. Additive manufacturing apparatus 100 also includes frame 110, pulverant material 112, and coater 114, which are used for powder containment and application. Pulverant material 112 may be any material suitable for use as a tool. Typically, pulverant material 112 will be some combination of ceramic and/or metal. For example, pulverant material 112 may be steel, stainless steel, or a high temperature superalloy. Coater 114 is arranged along a surface of frame 110, and may be moved across the surface of frame 110. Coater 114 may be, for example, a knife blade or a roller. As shown in FIG. 10, partially built tool 60A is present inside frame 110.

A user creates a computer file for computer 101 that defines a component with particular features, such as tool 60, in layers (that can be of different thicknesses). Computer 101 then controls the optical equipment to create the component. Laser 102 creates laser beam 108 which can be used for melting, sintering, or cutting. Laser 102 is pointed towards mirror 104, which is arranged to deflect laser beam 108 toward moving optical head 106. Generally, moving optical head 106 directs laser beam 108 towards areas within frame 110, which holds pulverant material 112. Generally, the areas melted or sintered form a layer of tool 60. In FIG. 10, partially built tool 60A is shown being built up on a layer-by-layer basis. Areas adjacent to partially built tool 60A can remain unmelted or unsintered to form dogleg slots 70 (shown in FIG. 7).

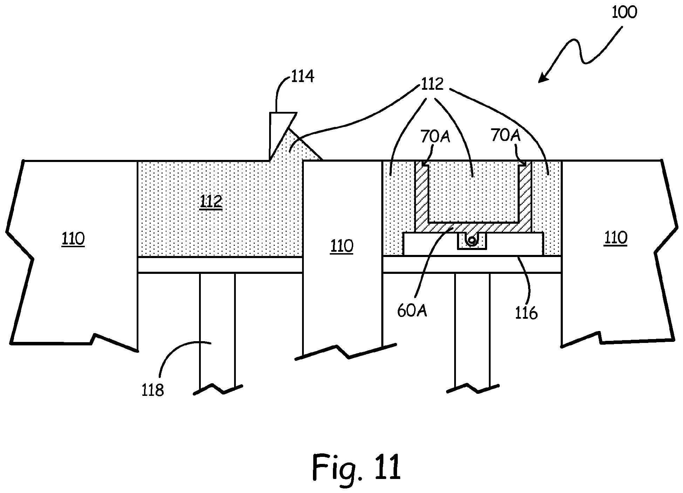

After each layer of partially built tool 60A is finished, the support holding partially built tool 60A (shown later in FIG. 11) is lowered by the thickness of one layer of pulverant material 112, and additional pulverant material 112 is added on top of the existing structures using coater 114. Then new layer of pulverant material 112 is melted or sintered to the top of partially built tool 60A, and the process is repeated. By repeating the process several times, a layer-by-layer object, such as a complete tool 60 including dogleg slots 70 and integral mounting point 68 (shown in FIG. 7) may be manufactured.

The process of adding layers by melting or sintering creates a certain surface finish on tool 60. This surface finish can be manipulated by changing the depth of the layers being added during the manufacturing process. More specifically, a thicker layer of pulverant material 112 requires a stronger laser beam 108 to melt or sinter, resulting in a part that is made faster but has a rougher surface finish. Conversely, a thinner layer of pulverant material 112 requires a weaker laser beam 108 to melt or sinter, resulting in a part that is made slower but has a finer surface finish. Thereby, the surface finish of tool 60 can be heterogeneous if defined as such in the computer file. For example, the majority of body 62 (shown in FIG. 7) starting from end cap 64 (shown in FIG. 7) can be made quickly using large layers and having a rough surface finish. But for the layers including dogleg slots 70, smaller layers can be used resulting in dogleg slots 70 having a fine surface finish.

FIG. 11 is a cross section view of additive manufacturing apparatus 100 along line 11-11 in FIG. 10. FIG. 11 is a cutaway view that shows the operation of additive manufacturing apparatus 100. FIG. 11 shows a DMLS apparatus, but it will be understood by those skilled in the art that other additive manufacturing techniques and apparatuses may be used.

Additive manufacturing apparatus 100 as shown in FIG. 11 includes many of the same parts as those shown in FIG. 10, such as frame 110, pulverant material 112, coater 114, and partially built tool 60A. FIG. 11 also shows a plurality of partially formed dogleg slots 70A, as well as component support 116 and material supply support 118. Component support 116 may be used to raise or lower partially built tool 60A. Material supply support 118 may be raised to elevate or lower pulverant material 112 above the working surface of frame 110.

FIG. 11 shows the arrangement of component support 116 and material supply support 118 in addition to the arrangement of parts shown in FIG. 10. As can be seen in FIG. 11, partially built tool 60A rests on component support 116. Likewise, pulverant material 112 rests on material supply support 118.

As each layer of partially built tool 60A is melted or sintered, component support 116 is lowered and material supply support 118 is raised. Coater 114 scrapes a layer of pulverant material 112 off of the top of the supply side and applies it in a layer across the top of partially built tool 60A. The process is then repeated until tool 60 is complete.

FIG. 11 shows one possible way of additively manufacturing tool 60 with a plurality of dogleg slots 70 as disclosed above in reference to FIGS. 7-9. Alternative methods for additively manufacturing components are possible. For example, selective laser sintering, electron beam melting, laser powder deposition, or electron beam wire manufacturing may be used to create objects in an additive fashion.

It should be recognized that the present invention provides numerous benefits and advantages. For example, tool 60 includes no more and no less than the optimal amount of material than is required to be operative. For another example, tool 60 can be made quickly and efficiently from a computer file using a laser sintering process.

### Discussion of Possible Embodiments

The following are non-exclusive descriptions of possible embodiments of the present invention.

A method of making a tool according to an exemplary embodiment of this disclosure, among other possible things includes: creating a computer file defining the tool in layers, the tool comprising: a cylindrical body having a first end and a second end; and a plurality of dogleg slots at the second end of the tool; wherein the tool includes at least one of the following features: a substantially square dogleg inner end corner, a substantially completely cylindrical dogleg surface, an angled dogleg inlet, and an integral mounting point on or proximate to the first end of the body; and building the tool using an additive manufacturing process that builds the tool on a layer-by-layer basis from the first end to the second end.

The method of the preceding paragraph can optionally include, additionally and/or alternatively, any one or more of the following features, configurations and/or additional components:
A further embodiment of the foregoing method, wherein the tool can include at least two of the following features: a substantially square dogleg inner end corner, a substantially completely cylindrical dogleg surface, an angled dogleg inlet, and an integral mounting point on or proximate to the first end of the body.

A further embodiment of any of the foregoing methods, wherein the tool can include at least three of the following features: a substantially square dogleg inner end corner, a substantially completely cylindrical dogleg surface, an angled dogleg inlet, and an integral mounting point on or proximate to the first end of the body.

A further embodiment of any of the foregoing methods, wherein the tool can include all of the following features: a substantially square dogleg inner end corner, a substantially completely cylindrical dogleg surface, an angled dogleg inlet, and an integral mounting point on or proximate to the first end of the body.

A further embodiment of any of the foregoing methods, wherein each of the plurality of dogleg slots can include a substantially square inner end corner and a curved inlet end corner.

A further embodiment of any of the foregoing methods, wherein the computer file can define a first layer height at a first location of the tool that includes the plurality of doglegs and a second layer height at a second location of the tool that is distal from the plurality of doglegs, wherein the first layer height is shorter than the second layer height.

A further embodiment of any of the foregoing methods, wherein the integral mounting point can be located at the first end.

A tool according to an exemplary embodiment of this disclosure, among other possible things includes: a cylindrical body having a first end and a second end, a plurality of dogleg slots at the second end of the body, and at least one of the following features: a substantially square dogleg inner end corner, a substantially completely cylindrical dogleg surface, an angled dogleg inlet, and an integral mounting point on or proximate to the first end of the body; the tool being made by the steps of: selectively sintering a first layer of pulverant material within a frame to make a partially built tool; lowering the partially built tool; adding a second layer of pulverant material on top of the partially built tool; and selectively sintering the second layer of pulverant material to the partially built tool.

The tool of the preceding paragraph can optionally include, additionally and/or alternatively, any one or more of the following features, configurations and/or additional components:
A further embodiment of the foregoing tool, wherein the tool can include at least two of the following features: a substantially square dogleg inner end corner, a substantially completely cylindrical dogleg surface, an angled dogleg inlet, and an integral mounting point on or proximate to the first end of the body.

A further embodiment of any of the foregoing tools, wherein the tool can include at least three of the following features: a substantially square dogleg inner end corner, a substantially completely cylindrical dogleg surface, an angled dogleg inlet, and an integral mounting point on or proximate to the first end of the body.

A further embodiment of any of the foregoing tools, wherein the tool can include all of the following features: a substantially square dogleg inner end corner, a substantially completely cylindrical dogleg surface, an angled dogleg inlet, and an integral mounting point on or proximate to the first end of the body.

A further embodiment of any of the foregoing tools, wherein the plurality of dogleg slots can be located on an inside of the cylindrical body.

A further embodiment of any of the foregoing tools, wherein the tool can be made by the further steps comprising: lowering the partially built tool after selectively sintering the second layer; adding a third layer of pulverant material on top of the partially built tool; and selectively sintering the second layer of pulverant material to the partially built tool; wherein the third layer of pulverant material is substantially larger than the second layer of pulverant material.

A further embodiment of any of the foregoing tools, wherein the tool can include the integral mounting point and can further comprise: an end cap at the first end of the body, the integral mounting point extending axially from the end cap.

A tool according to an exemplary embodiment of this disclosure, among other possible things includes: a cylindrical body having a first end and a second end; and a plurality of dogleg slots at the second end of the body; wherein the tool includes at least one of the following features: a substantially square dogleg inner end corner, a substantially completely cylindrical dogleg surface, an angled dogleg inlet, and an integral mounting point on or proximate to the first end of the body.

The tool of the preceding paragraph can optionally include, additionally and/or alternatively, any one or more of the following features, configurations and/or additional components:
A further embodiment of the foregoing tool, wherein the tool can include at least two of the following features: a substantially square dogleg inner end corner, a substantially completely cylindrical dogleg surface, an angled dogleg inlet, and an integral mounting point on or proximate to the first end of the body.

A further embodiment of any of the foregoing tools, wherein the tool can include at least three of the following features: a substantially square dogleg inner end corner, a substantially completely cylindrical dogleg surface, an angled dogleg inlet, and an integral mounting point on or proximate to the first end of the body.

A further embodiment of any of the foregoing tools, wherein the tool can include all of the following features: a substantially square dogleg inner end corner, a substantially completely cylindrical dogleg surface, an angled dogleg inlet, and an integral mounting point on or proximate to the first end of the body.

A further embodiment of any of the foregoing tools, wherein the plurality of dogleg slots can be located on an inside of the cylindrical body.

A further embodiment of any of the foregoing tools, wherein the tool can include the integral mounting point and can further comprise: an end cap at the first end of the body, the integral mounting point extending axially from the end cap.

## Claims

1. A method of making a lift and pull tool for a gas turbine engine, the method comprising:
creating a computer file defining the tool in layers, the tool comprising:
a cylindrical body having a first end and a second end; and
a plurality of dogleg slots at the second end of the tool;
wherein the tool includes at least one of the following features: a substantially square dogleg inner end corner, an angled dogleg inlet, and an integral mounting point on or proximate to the first end of the body; and
building the tool using an additive manufacturing process that builds the tool on a layer-by-layer basis from the first end to the second end, and **characterized by** the plurality of dogleg slots being located inside the cylindrical body and comprising a substantially completely cylindrical dogleg surface.

2. The method of claim 1, wherein the tool includes at least two of the following features: a substantially square dogleg inner end corner, an angled dogleg inlet, and an integral mounting point on or proximate to the first end of the body.

3. The method of claim 1, wherein the tool includes all of the following features: a substantially square dogleg inner end corner, an angled dogleg inlet, and an integral mounting point on or proximate to the first end of the body.

4. The method of claim 1, wherein each of the plurality of dogleg slots includes a substantially square inner end corner and a curved inlet end corner.

5. The method of claim 1, wherein the computer file defines a first layer height at a first location of the tool that includes the plurality of doglegs and a second layer height at a second location of the tool that is distal from the plurality of doglegs, wherein the first layer height is shorter than the second layer height.

6. The method of claim 1, wherein the integral mounting point is located at the first end.

7. The method of claim 1 wherein each of the plurality of dogleg slots (70) has a fillet (84) that is an arcuate transition between a bearing surface (80) and a dogleg surface (82) or wherein each of the plurality of dogleg slots (70) includes an inner end (74) with a bearing surface (80), wherein the bearing surface (80) extends to an innermost end of the inner end (74).

8. A lift and pull tool (10, 60) for a gas turbine engine, manufactured by the process of claims 1-7 comprising:
a cylindrical body (62) having a first end and a second end; and
a plurality of dogleg slots (70) at the second - end (66) of the body;
wherein the tool includes at least one of the following features: a substantially square dogleg inner end corner (78A-78B, 96A), an angled dogleg inlet (92), and an integral mounting point (68) on or proximate to the first end of the body, and **characterized by** the plurality of the dogleg slots being located inside the cylindrical body and comprising a substantially completely cylindrical dogleg surface (82)

9. The tool of claim 8, wherein the tool includes at least two of the following features: a substantially square dogleg inner end corner, an angled dogleg inlet, and an integral mounting point on or proximate to the first end of the body.

10. The tool of claim 8, wherein the tool includes all of the following features: a substantially square dogleg inner end corner, an angled dogleg inlet, and an integral mounting point on or proximate to the first end of the body.

11. The tool of claim 8, wherein the plurality of dogleg slots is located on an inside of the cylindrical body.

## Patentansprüche

1. Verfahren zum Herstellen eines Hebe- und Zugwerkzeugs für ein Gasturbinentriebwerk, wobei das Verfahren Folgendes umfasst:
Erzeugen einer Computerdatei, die das Werkzeug in Schichten definiert, wobei das Werkzeug Folgendes umfasst:
einen zylindrischen Körper mit einem ersten Ende und einem zweiten Ende; und
eine Vielzahl von abgeknickten Schlitzen an dem zweiten Ende des Werkzeugs;
wobei das Werkzeug mindestens eines der folgenden Merkmale beinhaltet: eine im Wesentlichen quadratische abgeknickte innere Endecke, einen angewinkelten abgeknickten Einlass und einen integralen Montagepunkt an dem oder in der Nähe des ersten Endes des Körpers; und
Erstellen des Werkzeugs unter Verwenden eines additiven Fertigungsprozesses, der das Werkzeug von dem ersten Ende zu dem zweiten Ende auf einer Schicht-für-Schicht-Basis erstellt und **dadurch gekennzeichnet, dass** sich die Vielzahl von abgeknickten Schlitzen innerhalb des zylindrischen Körpers befindet und eine im Wesentlichen vollständig zylindrische abgeknickte Fläche aufweist.

2. Verfahren nach Anspruch 1, wobei das Werkzeug mindestens zwei der folgenden Merkmale beinhaltet: eine im Wesentlichen quadratische abgeknickte innere Endecke, einen angewinkelten abgeknickten Einlass und einen integralen Montagepunkt an dem oder in der Nähe des ersten Endes des Körpers.

3. Verfahren nach Anspruch 1, wobei das Werkzeug alle der folgenden Merkmale beinhaltet: eine im Wesentlichen quadratische abgeknickte innere Endecke, einen angewinkelten abgeknickten Einlass und einen integralen Montagepunkt an dem oder in der Nähe des ersten Endes des Körpers.

4. Verfahren nach Anspruch 1, wobei jeder der Vielzahl von abgeknickten Schlitzen eine im Wesentlichen quadratische innere Endecke und eine gekrümmte Einlassendecke beinhaltet.

5. Verfahren nach Anspruch 1, wobei die Computerdatei eine erste Schichthöhe an einer ersten Stelle des Werkzeugs, die die Vielzahl von abgeknickten Schlitzen beinhaltet, und eine zweite Schichthöhe an einer zweiten Stelle des Werkzeugs, die distal von der Vielzahl von abgeknickten Werkzeugen ist, definiert, wobei die erste Schichthöhe kürzer als die zweite Schichthöhe ist.

6. Verfahren nach Anspruch 1, wobei sich der integrale Montagepunkt an dem ersten Ende befindet.

7. Verfahren nach Anspruch 1, wobei jeder der Vielzahl von abgeknickten Schlitzen (70) eine Auskehlung (84) beinhaltet, die ein bogenförmiger Übergang zwischen einer Lagerfläche (80) und einer abgeknickten Fläche (82) ist, oder wobei jeder der Vielzahl von abgeknickten Schlitzen (70) ein inneres Ende (74) mit einer Lagerfläche (80) beinhaltet, wobei sich die Lagerfläche (80) zu einem am weitesten innen gelegenen Ende des inneren Endes (74) erstreckt.

8. Hebe- und Zugwerkzeug (10, 60) für ein Gasturbinentriebwerk, das durch den Prozess nach einem der Ansprüche 1-7 gefertigt wurde, Folgendes umfassend:
einen zylindrischen Körper (62) mit einem ersten Ende und einem zweiten Ende; und
eine Vielzahl von abgeknickten Schlitzen (70) an dem zweiten Ende (66) des Körpers;
wobei das Werkzeug mindestens eines der folgenden Merkmale beinhaltet: eine im Wesentlichen quadratische abgeknickte innere Endecke (78A-78B, 96A), einen angewinkelten abgeknickten Einlass (92) und einen integralen Montagepunkt (68) an dem oder in der Nähe des ersten Endes des Körpers, und **dadurch gekennzeichnet, dass** sich die Vielzahl von abgeknickten Schlitzen innerhalb des zylindrischen Körpers befindet und eine im Wesentlichen vollständig zylindrische abgeknickte Fläche (82) aufweist.

9. Werkzeug nach Anspruch 8, wobei das Werkzeug mindestens zwei der folgenden Merkmale beinhaltet: eine im Wesentlichen quadratische abgeknickte innere Endecke, einen angewinkelten abgeknickten Einlass und einen integralen Montagepunkt an dem oder in der Nähe des ersten Endes des Körpers.

10. Werkzeug nach Anspruch 8, wobei das Werkzeug alle der folgenden Merkmale beinhaltet: eine im Wesentlichen quadratische abgeknickte innere Endecke, einen angewinkelten abgeknickten Einlass und einen integralen Montagepunkt an dem oder in der Nähe des ersten Endes des Körpers.

11. Werkzeug nach Anspruch 8, wobei sich die Vielzahl von abgeknickten Schlitzen an einer Innenseite des zylindrischen Körpers befindet.

## Revendications

1. Procédé de fabrication d'un outil de levage et de traction pour un moteur à turbine à gaz, le procédé comprenant :
la création d'un fichier informatique définissant l'outil en couches, l'outil comprenant :
un corps cylindrique ayant une première extrémité et une seconde extrémité ; et
une pluralité de fentes coudées au niveau de la seconde extrémité de l'outil ;
dans lequel l'outil inclut au moins une des caractéristiques suivantes : un coin d'extrémité interne coudé sensiblement carré, une entrée coudée inclinée et un point de montage d'une seule pièce sur ou à proximité de la première extrémité du corps ; et
la construction de l'outil au moyen d'un processus de fabrication additive qui construit l'outil sur une base couche-par-couche de la première extrémité à la seconde extrémité, et **caractérisé en ce que** la pluralité de fentes coudées se trouve à l'intérieur du corps cylindrique et comprend une surface coudée sensiblement complètement cylindrique.

2. Procédé selon la revendication 1, dans lequel l'outil inclut au moins deux caractéristiques suivantes : un coin d'extrémité interne coudé sensiblement carré, une entrée coudée inclinée et un point de montage d'une seule pièce sur ou à proximité de la première extrémité du corps.

3. Procédé selon la revendication 1, dans lequel l'outil inclut l'ensemble des caractéristiques suivantes : un coin d'extrémité interne coudé sensiblement carré, une entrée coudée inclinée et un point de montage d'une seule pièce sur ou à proximité de la première extrémité du corps.

4. Procédé selon la revendication 1, dans lequel chacune de la pluralité de fentes coudées inclut un coin d'extrémité interne sensiblement carré et un coin d'extrémité d'entrée incurvé.

5. Procédé selon la revendication 1, dans lequel le fichier informatique définit une première hauteur de couche à un premier emplacement de l'outil qui inclut la pluralité de coudes et une seconde hauteur de couche à un second emplacement de l'outil qui est distal de la pluralité de coudes, dans lequel la première hauteur de couche est plus petite que la seconde hauteur de couche.

6. Procédé selon la revendication 1, dans lequel le point de montage d'une seule pièce se trouve au niveau de la première extrémité.

7. Procédé selon la revendication 1, dans lequel chacune de la pluralité de fentes coudées (70) possède un congé de raccordement (84) qui est une transition arquée entre une surface d'appui (80) et une surface coudée (82) ou dans lequel chacune de la pluralité de fentes coudées (70) inclut une extrémité interne (74) avec une surface d'appui (80), dans lequel la surface d'appui (80) s'étend vers une extrémité le plus à l'intérieur de l'extrémité interne (74).

8. Outil de levage et de traction (10, 60) pour un moteur de turbine à gaz, fabriqué par le processus des revendications 1 à 7, comprenant :
un corps cylindrique (62) ayant une première extrémité et une seconde extrémité ; et
une pluralité de fentes coudées (70) au niveau de la seconde extrémité (66) du corps ;
dans lequel l'outil inclut au moins une des caractéristiques suivantes : un coin d'extrémité interne coudé sensiblement carré (78A-78B, 96A), une entrée coudée inclinée (92) et un point de montage d'une seule pièce (68) sur ou à proximité de la première extrémité du corps, et **caractérisé en ce que** la pluralité de fentes coudées se trouve à l'intérieur du corps cylindrique et comprend une surface coudée (82) sensiblement complètement cylindrique.

9. Outil selon la revendication 8, dans lequel l'outil inclut au moins deux des caractéristiques suivantes : un coin d'extrémité interne coudé sensiblement carré, une entrée coudée inclinée et un point de montage d'une seule pièce sur ou à proximité de la première extrémité du corps.

10. Outil selon la revendication 8, dans lequel l'outil inclut l'ensemble des caractéristiques suivantes : un coin d'extrémité interne coudé sensiblement carré, une entrée coudée inclinée et un point de montage d'une seule pièce sur ou à proximité de la première extrémité du corps.

11. Outil selon la revendication 8, dans lequel la pluralité de fentes coudées se trouve sur un intérieur du corps cylindrique.
